# EUROPÄISCHE PATENTANMELDUNG

(11) **EP 4 056 968 A1**
(43) Veröffentlichungstag der Anmeldung: **14.09.2022**
(21) Anmeldenummer: 21209724.0
(22) Anmeldetag: 22.11.2021
(51) Int. Cl.: G01J 5/00, G01J 5/0813, G01J 5/48, B29C 49/78, B29C 49/02, B29C 49/06

(54) **VORRICHTUNG UND VERFAHREN ZUR TEMPERATURERFASSUNG VON BEHÄLTNISSEN UND INSBESONDERE VON KUNSTSTOFFVORFORMLINGEN**

(30) Priorität: 09.03.2021 DE 102021105664
(71) Anmelder: Krones AG, 93073 Neutraubling (DE)
(72) Erfinder: Steger, Sebastian, 93073 Neutraubling (DE); Senn, Konrad, 93073 Neutraubling (DE)
(74) Vertreter: Bittner, Bernhard

(57) **Zusammenfassung**

Vorrichtung zur Temperaturerfassung von Behältnissen und insbesondere von Kunststoffvorformlingen mit einer Transporteinrichtung (2), welche die die Behältnisse entlang eines vorgegebenen Transportpfads transportiert und mit einer Temperaturerfassungseinrichtung (4) zum berührungslosen Erfassen einer Temperatur zumindest eines Bereichs eines von der Transporteinrichtung transportierten Behältnisses, wobei die Temperaturerfassungseinrichtung (4) dazu geeignet und bestimmt ist, von dem Behältnis abgegebene Wärmestrahlung zu erfassen,
dadurch gekennzeichnet, dass in einem Strahlengang der Wärmestrahlung (W) zwischen dem Behältnis (10) und der Temperaturerfassungseinrichtung eine erste Strahlungsumlenkeinrichtung (6) angeordnet ist, welche von dem Behältnis (10) auf diese Strahlungsumlenkeinrichtung (6) gelangende Wärmestrahlung zu der Temperaturerfassungseinrichtung (4) umlenkt.

## Beschreibung

Die vorliegende Erfindung bezieht sich auf eine Vorrichtung und ein Verfahren zur Temperaturerfassung von Behältnissen und insbesondere von Kunststoffvorformlingen. Im Bereich der getränkeherstellenden Industrie ist es bekannt, dass Kunststoffvorformlinge erwärmt werden und anschließend in diesem erwärmten Zustand zu Kunststoffflaschen umgeformt werden, was beispielsweise mittels so genannter Streckblasmaschinen erfolgt.

Zur Steuerung dieser Anlagen wird zum Teil ein Temperaturprofil der Kunststoffvorformlinge während oder nach der Erwärmung aufgenommen. Dabei wird unter einem Temperaturprofil insbesondere das Temperaturprofil in einer Längsrichtung des Kunststoffvorformlings (ggfs. aber auch in dessen Umfangsrichtung) verstanden. Zu diesem Zweck werden im Stand der Technik üblicherweise Infrarot (IR)-Kameras eingesetzt oder IR-Zeilen-Kameras. Diese werden insbesondere auch dann eingesetzt, wenn das Messobjekt, das heißt das Behältnis, relativ zum Messmittel bewegt wird.

Allerdings sind derartige Infrarot-Kameras oder auch Infrarot-Zeilen-Kameras sehr teure Messmittel und die Auswertung der aufgezeichneten Daten ist in den meisten Fällen sehr aufwendig bzw. rechenintensiv, wodurch noch weitere Kosten für die entsprechende Hardware entstehen. Wenn weiterhin hohe Samplingraten erforderlich sind, steigen die Kosten nochmals deutlich.

Andererseits sind aus dem Stand der Technik auch Systeme bekannt, welche beispielsweise Pyrometer einsetzen. Diese sind deutlich günstiger und erfordern in den meisten Fällen weniger aufwändige Datenaufbereitung oder Datenauswertung, wodurch auch diese Kosten geringer ausfallen. Allerdings kann mit einem Pyrometer nur eine mittlere Temperatur innerhalb eines Messflecks gemessen werden.

Dies führt dazu, dass aufgrund fehlender Information (es wird nur die Temperatur eines Messflecks gemessen und nicht ein gesamtes Temperaturprofil) oftmals keine Prozessüberwachung und/oder -Regelung möglich ist. Wird zum Beispiel an einem Heizmodul einer Heizmaschine nur ein Pyrometer zur Messung der Seitenwandtemperatur eingesetzt, so erlaubt dies keine Auflösung der Temperatur.

Wenn nur ein Temperaturmessgerät eingesetzt wird, so misst dieses üblicherweise die Temperatur relativ nahe an dem Tragring eines Kunststoffvorformlings, wodurch Abweichungen zu einem Sollprofil in einem unteren Bereich langer Kunststoffvorformlinge gar nicht gemessen werden können. Auf diese Weise ist weder eine vollständige Überwachung geschweige denn eine Regelung möglich.

Der vorliegenden Erfindung liegt daher die Aufgabe zu Grunde, eine möglichst genaue Temperaturerfassung mit kostenseitig vertretbaren Mitteln durchzuführen. Dies wird erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zur Temperaturerfassung von Behältnissen und insbesondere von Kunststoffvorformlingen weist eine Transporteinrichtung auf, welche die Behältnisse entlang eines vorgegebenen Transportpfads transportiert und eine Temperaturerfassungseinrichtung zum berührungslosen Erfassen einer Temperatur zumindest eines Bereichs eines von der Transporteinrichtung transportierten Behältnisses, wobei die Temperaturerfassungseinrichtung dazu geeignet und bestimmt ist, von dem Behältnis abgegebene Wärmestrahlung zu erfassen.

Erfindungsgemäß ist in einem Strahlengang der Wärmestrahlung zwischen dem Behältnis und der Temperaturerfassung eine erste Strahlungsumlenkeinrichtung angeordnet, welche von dem Behältnis auf diese Strahlungsumlenkungseinrichtung gelangende Wärmestrahlung zu der Temperaturerfassungseinrichtung umlenkt.

Es wird daher vorteilhaft vorgeschlagen, dass die Temperaturerfassungseinrichtung nicht unmittelbar die Wärmestrahlung der Behältnisse insbesondere Kunststoffvorformlinge aufnimmt, sondern nur die Wärmestrahlung, die (ausgehend von den Behältnissen von der Strahlungsumlenkeinrichtung umgelenkt wurde. Auf diese Weise können wie unten genauer beschrieben größere Bereiche des Behältnisses überwacht bzw. gemessen werden. Unter einem Umlenken von (Wärme-)Strahlung wird insbesondere verstanden, dass die Strahlrichtung der Wärmestrahlung geändert wird. Bevorzugt wird die Strahlung um einen Winkel von wenigstens 30°, bevorzugt von wenigstens 50°, bevorzugt von wenigstens 70°, bevorzugt von wenigstens 90°, bevorzugt von wenigstens 100°, und bevorzugt von wenigstens 110° umgelenkt durch die Strahlungsumlenkeinrichtung umgelenkt.

Bevorzugt werden die aufgenommenen Temperaturdaten zur Steuerung und/oder Regelung einer Vorrichtung zum Erwärmen von Kunststoffvorformlingen und/oder zur Steuerung und/oder Regelung einer Umformungseinrichtung zum Umformen von Kunststoffvorformlingen zu Kunststoffbehältnissen verwendet.

Bei einer bevorzugten Ausführungsform weist die Transporteinrichtung eine Dreheinrichtung auf, um die Behältnisse bezüglich deren Längsachse zu drehen. Auf diese Weise ist auch eine Temperaturerfassung über unterschiedliche Bereiche in einer Umfangsrichtung der Behältnisse möglich.

Bei einer bevorzugten Ausführungsform ist die Temperaturerfassungseinrichtung derart ausgerichtet, dass sie keine unmittelbar von dem Behältnis abgegebene Wärmstrahlung aufnimmt. Es wird also insbesondere nur von der Strahlungsumlenkeinrichtung umgelenkte und insbesondere reflektierte Strahlung aufgenommen.

Bei einer weiteren bevorzugten Ausführungsform ist die Temperaturerfassungseinrichtung dazu geeignet und bestimmt, eine mittlere Temperatur (der Behältnisse) aus der auf sie austreffende Wärmestrahlung zu bestimmen. Insbesondere handelt es sich damit bei der Temperaturerfassungseinrichtung nicht um eine Einrichtung, welche ortsaufgelöst Temperaturen aufnimmt, wie dies beispielsweise bei einer Infrarotkamera der Fall ist.

Bei einer weiteren bevorzugten Ausführungsform ist die Temperaturerfassungseinrichtung ein Pyrometer oder weist ein solches auf. Der Vorteil eines Pyrometers ist unter anderem der, dass damit bei vergleichbaren Kosten wesentlich höhere Samplingraten als mit IR-Kameras zu erreichen sind bzw. dass bei vergleichbaren Samplingraten wesentlich geringere Kosten entstehen.

Bei einer weiteren bevorzugten Ausführungsform ist die erste Strahlungsumlenkeinrichtung aus einer Gruppe von Strahlungsumlenkeinrichtungen ausgewählt, welche Spiegel und Prismen enthält. Dabei ist es möglich, dass Spiegel oder Prismen verwendet werden, deren Reflektivität auf Wärmestrahlung und insbesondere auf Infrarot-Strahlung angepasst ist. Zu diesem Zweck können diese Spiegel entsprechende Beschichtungen aufweisen.

Es wird also im Rahmen der Erfindung vorgeschlagen, dass eine Aufzeichnung von Temperaturprofilen beispielsweise mittels eines Pyrometers erfolgt. Dabei werden bevorzugt die oftmals bei derartigen Anlagen ohnehin bereits vorhandenen Pyrometer nicht direkt auf das Messobjekt, das heißt die Behältnisse ausgerichtet, sondern der Messfleck wird (mit der Strahlungsumlenkeinrichtung) auf das Messobjekt gelenkt.

So ist es möglich, dass auf die Strahlungsumlenkeinrichtung eine großflächige Strahlung auftrifft und ein Teil davon auf Temperaturerfassungseinrichtung umgelenkt wird. In umgekehrter Betrachtung wird ein Messfleck der Temperaturerfassungseinrichtung auf bestimmte Bereiche der Behältnisse ausgerichtet.

Bei der Strahlungsumlenkeinrichtung kann es sich beispielsweise um einen Spiegel insbesondere mit einer planaren Oberfläche handeln wie beispielsweise einen einseitigen, einen doppelseitigen oder einen mehrseitigen Spiegel. Daneben können auch komplexere Spiegel zum Einsatz kommen, beispielsweise Spiegel mit quadratischen oder kubischen Flächen oder mit Freiformflächen. So wäre es möglich, dass beispielsweise Optimierungen hinsichtlich einer Verzerrung des Messflecks erreicht werden.

Bei einer weiteren bevorzugten Ausführungsform ist in dem Strahlengang zwischen dem Behältnis und der Temperaturerfassungseinrichtung wenigstens ein refraktives Element angeordnet. Bei diesem refraktiven Element kann es sich insbesondere um eine Linse handeln. Bevorzugt ist dieses refraktive Element zwischen der Strahlungsumlenkeinrichtung und der Temperaturerfassungseinrichtung angeordnet. Es wäre jedoch auch möglich, dass das refraktive Element zwischen dem oder den Behältnissen und der Strahlungsumlenkeinrichtung angeordnet ist. Auch können mehrere refraktive Elemente in dem Strahlengang vorgesehen sein.

Bei einer weiteren bevorzugten Ausführungsform ist die Strahlungsumlenkeinrichtung beweglich. Auf diese Weise kann der Messfleck gegenüber dem Behältnis verschoben werden bzw. der Bereich der Behältnisse bzw. Kunststoffvorformlinge, deren Temperatur erfasst werden verändert werden. Auf diese Weise kann in einer bevorzugten Ausführungsform beispielsweise der Messfleck eines Pyrometers über einen rotierbaren Spiegel über das Messobjekt gelenkt werden. Durch eine Rotation und/oder Winkeländerung des Spiegels wird der Messfleck über das Messobjekt, das heißt das Behältnis geführt.

Es wäre jedoch auch möglich, dass nicht die Strahlungsumlenkeinrichtung beweglich ist, sondern die Temperaturerfassungseinrichtung, um so den Messfleck zu verschieben. Auch könnten sowohl die Strahlungsumlenkeinrichtung als auch die Temperaturerfassungseinrichtung beweglich sein. Daneben wäre es auch denkbar, dass die Strahlungsumlenkeinrichtung und die Temperaturerfassungseinrichtung nicht beweglich sind, aber die Strahlungsumlenkeinrichtung mehrere schaltbare Spiegelsegmente aufweist, so dass auf diese Weise der Messfleck verschiebbar ist.

Bei bewegten Messobjekten ist bevorzugt die Rotationsachse eines Spiegels in einem entsprechenden Winkel zur Vorschubbewegung angestellt, wodurch die Vorschubbewegung der Behältnisse kompensiert wird.

Besonders bevorzugt weist die Vorrichtung einen Antrieb auf, um die Strahlungsumlenkeinrichtung zu bewegen. Dabei ist es möglich, dass die Bewegung der Strahlungsumlenkeinrichtung auch unter Berücksichtigung der Transportbewegung der Behältnisse erfolgt. So kann beispielsweise bei der Bewegung der Strahlungsumlenkeinrichtung die Transportgeschwindigkeit der Behältnisse und insbesondere der Kunststoffvorformlinge berücksichtigt werden.

Dabei ist es beispielsweise möglich, dass die besagte Bewegung der Strahlungsumlenkeinrichtung eine reziproke Bewegung und/oder periodische Bewegung ist, um auf diese Weise nacheinander die einzelnen Kunststoffvorformlinge hinsichtlich der Temperatur zu überwachen.

Daneben oder zusätzlich wäre es auch denkbar, dass ein Antrieb zum Bewegen der Temperaturerfassungseinrichtung vorgesehen ist.

Bevorzugt handelt es sich bei der Antriebseinrichtung um eine elektromotorische Antriebseinrichtung. Alternativ wäre auch eine mechanische Kopplung an die Transporteinrichtung oder an den Antrieb der Transporteinrichtung möglich. Dann würden Transport- und Umlenkeinrichtung bevorzugt stets synchron laufen.

Bei einer weiteren bevorzugten Ausführungsform weist die Vorrichtung eine zweite Strahlungsumlenkeinrichtung auf, die ebenfalls in dem Strahlengang der Wärmestrahlung zwischen dem Behältnis und der Temperaturerfassungseinrichtung angeordnet ist. Diese zweite Strahlungsumlenkeinrichtung, bei der es sich beispielsweise ebenfalls um ein Prisma oder einen Spiegel handeln kann, dient bevorzugt zur Messung von speziellen Bereichen der Kunststoffvorformlinge wie etw. einer Bodenkuppe.

Bevorzugt ist die erste Strahlungsumlenkeinrichtung und/oder die zweite Strahlungsumlenkeinrichtung beweglich.

Diese zweite Strahlungsumlenkeinrichtung kann dabei stationär oder bewegt angeordnet sein. Bei dieser Ausgestaltung ist also bevorzugt das hier vorgeschlagene Messsystem um einen stehenden (oder auch Bedarf auch) beweglichen Spiegel erweitert, sodass der Messfleck auch noch auf schwer zugängliche Bereiche gelenkt werden kann, wie etwa wie oben erwähnt die Kuppe eines Kunststoffvorformlings.

Bei einer weiteren vorteilhaften Ausführungsform weist die Vorrichtung ein Referenzelement auf, welches dazu geeignet und bestimmt ist, Wärmestrahlung an die Temperaturerfassungseinrichtung abzugeben. Insbesondere kann dieses Referenzelement dabei eine definierte und/oder bekannte Wärmestrahlung abgeben. Dabei kann dieses Referenzelement als Flächenstrahler ausgebildet sein.

Insbesondere kann dieses Referenzelement dabei derart angeordnet sein, dass es ebenfalls über die Strahlungsumlenkeinrichtung beispielsweise einen Spiegel die Wärmestrahlung an die Temperaturerfassungseinrichtung abgibt. Bei dieser Ausführungsform ist es möglich, dass der Messfleck auch über eine Referenzfläche geführt wie insbesondere eine Referenzfläche mit bekannter Temperatur, da hierzu insbesondere Verschmutzungseinflüsse der Spiegel und/oder andere Einflüsse kompensiert und/oder ermittelt werden können.

Die vorliegende Erfindung ist weiterhin auf eine Anordnung zum Herstellen von Kunststoffbehältnissen gerichtet, welche eine Erwärmungseinrichtung aufweist, welche dazu geeignet und bestimmt ist Kunststoffvorformlinge zu Erwärmen und mit einer in einer Transportrichtung der Kunststoffvorformlinge nach der Erwärmungseinrichtung angeordneten Umformungseinrichtung zum Umformen von Kunststoffvorformlingen zu Kunststoffbehältnissen, wobei die Vorrichtung weiterhin eine Vorrichtung zur Temperaturerfassung der oben beschriebenen Art aufweist. Bevorzugt weist die Anordnung auch eine Transporteinrichtung auf, welche die Kunststoffvorformlinge von der Erwärmungseinrichtung zu der Umformungseinrichtung transportiert.

Bei einer bevorzugten Ausführungsform weist die Erwärmungseinrichtung eine Steuerungseinrichtung auf, welche einzelne Parameter der Erwärmungseinrichtung wie beispielsweise einer Heizleistung einzelner Heizeinrichtungen eine Transportgeschwindigkeit, eine Rotationsgeschwindigkeit von Kunststoffvorformlingen, Prozesskühlluft oder dergleichen steuert.

Bevorzugt weist auch die Umformungseinrichtung eine Steuerungseinrichtung und/oder Regelungseinrichtung auf, welche eine Steuerung und/oder Regelung von einzelnen Parametern des Umformungsvorgangs ermöglicht. So können beispielsweise Blasdrücke verändert werden mit denen Kunststoffvorformlinge expandiert werden, es kann eine Reckstangenbewegung angepasst werden, es können Öffnungs- und Schließvorgänge von Blasformen verändert werden und dergleichen.

Bevorzugt steuert und/oder regelt wenigstens einer der hier genannten Steuerungs- und/oder Regelungseinrichtungen die Erwärmungseinrichtung und/oder die Umformungseinrichtung auch unter Berücksichtigung einer erfassten Temperatur der einzelnen Kunststoffvorformlinge. Bevorzugt handelt es sich bei der Erwärmungseinrichtung um einen Infrarot-Ofen, es wäre jedoch auch die Verwendung beispielsweise eines Mikrowellenofens denkbar.

Bevorzugt sind die Heizeinrichtungen der Erwärmungseinrichtung stationär angeordnet und die Kunststoffvorformlinge werden an diesen vorbeitransportiert.

Bevorzugt handelt es sich bei der Umformungseinrichtung um eine Blasmaschine und insbesondere eine Streckblasmaschine.

Bei einer weiteren bevorzugten Ausführungsform ist die Vorrichtung zur Temperaturerfassung in einem Auslaufbereich der Kunststoffvorformlinge angeordnet. So kann die Transporteinrichtung eine umlaufende Transporteinrichtung sein und die Temperaturerfassungseinrichtung ist bevorzugt in der zweiten Hälfte des Transportpfads der Kunststoffvorformlinge, bevorzugt im letzten Drittel, bevorzugt im letzten Viertel, bevorzugt im letzten Fünftel und bevorzugt im letzten Sechstel des Transportpfads angeordnet. Auch ist es möglich, dass die Temperatur der Kunststoffvorformlinge unmittelbar im Anschluss an den Erwärmungsvorgang, gegebenenfalls auch an einer weiteren Transporteinrichtung wie einem weiterem Transportstern erfasst wird.

Daneben ist es auch möglich, dass mehrere Temperaturfassungseinrichtungen der hier beschrieben Art vorgesehen sind, wobei sich diese an unterschiedlichen Positionen in dem Transportpfad der Kunststoffvorformlinge befinden können.

Die vorliegende Erfindung ist weiterhin auf ein Verfahren zur Temperaturerfassung von Behältnissen und insbesondere von Kunststoffvorformlingen gerichtet, wobei eine Transporteinrichtung die Behältnisse entlang eines vorgegebenen Transportpfads transportiert und eine Temperaturerfassungseinrichtung eine Temperatur zumindest eines Bereichs eines von der Transporteinrichtung transportierten Behältnisses berührungslos erfasst, wobei die Temperaturerfassungseinrichtung von dem Behältnis abgegebene Wärmestrahlung erfasst.

Erfindungsgemäß ist in einem Strahlengang der Wärmestrahlung zwischen dem Behältnis und der Temperaturerfassungseinrichtung eine erste Strahlungsumlenkeinrichtung angeordnet, welche von dem Behältnis auf diese Strahlungsumlenkeinrichtung gelangende Wärmestrahlung zu der Temperaturerfassungseinrichtung hin umlenkt.

Es wird also auch verfahrensseitig vorgeschlagen, dass die von den Behältnissen abgegebene Wärmestrahlung nicht unmittelbar von der Temperaturerfassungseinrichtung aufgenommen wird, sondern von der Strahlungsumlenkeinrichtung auf die Temperaturerfassungseinrichtung (und oder ein Sensorelement dieser Temperaturerfassungseinrichtung) umgelenkt wird. Bevorzugt handelt es sich bei den Behältnissen daher um Kunststoffvorformlinge.

Bei einem weiteren bevorzugten Verfahren wird die Temperatur während oder nach einem Erwärmungsvorgang der Kunststoffvorformlinge erfasst. Allerdings ist es nicht zwingend erforderlich, dass ein Erwärmungsvorgang stattgefunden hat. So kommt es beim Befüllen der Behälter oftmals zu einer Abkühlung der Behälter. Diese kann dann auch mit der gleichen Temperaturmesseinrichtung erfasst werden. Damit kann die hier beschriebene Vorrichtung auch in anderen Anlagen zum Einsatz kommen, wie beispielsweise in Fülleinrichtungen oder Etikettiereinrichtungen.

Bei einem weiteren bevorzugten Verfahren wird die Strahlungsumlenkeinrichtung insbesondere während der Erfassung der Temperatur bewegt, derart das die Temperatur unterschiedlicher Bereiche der Kunststoffvorformlinge erfasst werden kann.

Bei einem weiteren bevorzugten Verfahren wird die Bewegung der Strahlungsumlenkeinrichtung periodisch bewegt, sodass hintereinander Temperaturen mehrerer Kunststoffvorformlinge erfasst werden. Bei einem weiteren bevorzugten Verfahren wird eine gleichförmige Bewegung der Strahlungsumlenkeinrichtung durchgeführt.

Bei einem bevorzugten Verfahren wird die Temperatur der Kunststoffvorformlinge auch in Abhängigkeit von einer Position der Strahlungsumlenkeinrichtung erfasst. Auf diese Weise ist es möglich, eine gemessene Temperatur unterschiedlichen Bereichen des vermessenden Kunststoffvorformlings zuzuordnen. So ist es beispielsweise möglich, dass für einen zu messenden Kunststoffvorformling fünf oder sechs oder mehrere Temperaturwerte erfasst werden, wobei diese Temperaturwerte auch unterschiedlichen Bereichen eines Kunststoffvorformlings zugeordnet werden, beispielsweise einem Bereich direkt unterhalb eines Tragrings des Kunststoffvorformlings, einem Körperbereich, einem Bereich nahe der Bodenkuppe und dergleichen.

Bei einem bevorzugten Verfahren wird die Temperatur der Behältnisse kontinuierlich aufgenommen, es wäre jedoch auch denkbar, dass die Temperatur zu vorgegebenen Zeitpunkten aufgenommen wird, wobei bevorzugt diese Zeitpunkte bestimmten Bereichen der Behältnisse zugeordnet werden können.

Bei einem weiteren bevorzugten Verfahren wird auf Basis der erfassten Temperaturen der Kunststoffvorformlinge eine Erwärmungseinrichtung zum Erwärmen von Kunststoffvorformlingen und/oder eine Umformungseinrichtung zum Umformen von Kunststoffvorformlingen zu Kunststoffbehältnissen gesteuert und/oder geregelt.

Weitere Vorteile und Ausführungsformen ergeben sich aus den beigefügten Zeichnungen:

Darin zeigen:
- Fig. 1: eine Anordnung zum Herstellen von Kunststoffbehältnissen;
- Fig. 2: eine Darstellung einer Vorrichtung zum Erfassen der Temperatur von Kunststoffvorformlingen.

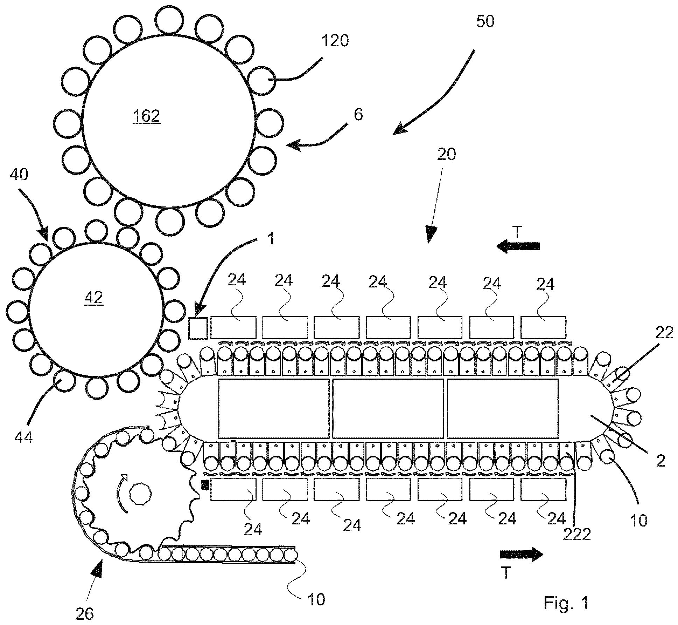

Figur 1 zeigt eine schematische Darstellung einer Anordnung 50 zum Herstellen von Kunststoffbehältnissen. Dabei werden Kunststoffvorformlinge 10 mittels einer Zuführeinrichtung 26 einer in ihrer Gesamtheit mit 20 gekennzeichneten Erwärmungseinrichtung zum Erwärmen von Kunststoffvorformlingen zugeführt. Diese Erwärmungseinrichtung 20 weist dabei eine Vielzahl von Heizeinrichtungen 24 auf, welche stationär angeordnet ist. Die Kunststoffvorformlinge 10 werden an Halteeinrichtungen 22 befestigt und mit der Transporteinrichtung 2 an diesen Heizeinrichtungen vorbeigeführt. Nach diesem Heizeinrichtungen 24 ist eine Vorrichtung 1 zur Temperaturfassung der Kunststoffvorformlinge angeordnet. An die Erwärmungseinrichtung 20 schließt sich eine mit 40 bezeichnete Transporteinrichtung wie etwa ein Transferstern an. Diese weist einen Träger 42 auf, an dem eine Vielzahl von Halteeinrichtungen zum Halten der Kunststoffvorformlinge angeordnet ist.

An diese Transporteinrichtung 40 schließt sich eine Umformungseinrichtung 6 an, welche die Kunststoffvorformlinge zu Kunststoffbehältnissen umformt und insbesondere bläst. Auch diese Umformungseinrichtung weist dabei einen drehbaren Träger 162 auf, an dem eine Vielzahl von Umformungsstationen 120 angeordnet ist.

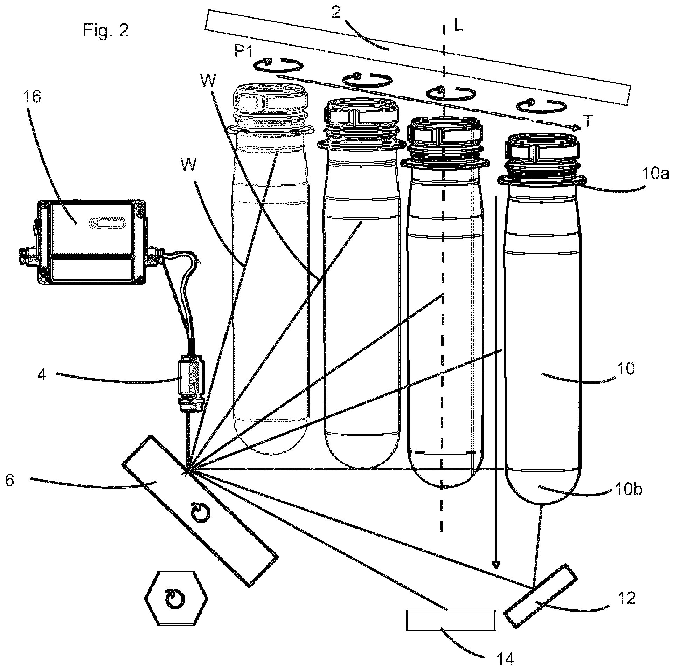

Figur 2 beschreibt die vorliegende Erfindung und insbesondere die Temperaturerfassung der Kunststoffvorformlinge. Dabei ist ein Kunststoffvorformling gezeigt, der jedoch vierfach abgebildet ist, um dessen fortlaufende Bewegung darzustellen. Das Bezugszeichen 2 kennzeichnet die Transporteinrichtung, welche den Kunststoffvorformling 10 entlang des Pfeils bewegt.

Das Bezugszeichen 4 kennzeichnet eine Temperaturerfassungseinrichtung, welche zum Erfassen der Temperatur des Kunststoffvorformlings bzw. der Kunststoffvorformlinge 10 dient. Man erkennt, dass diese Temperaturerfassungseinrichtung nicht direkt auf den Kunststoffvorformling ausgerichtet ist. Das Bezugszeichen 16 kennzeichnet eine Auswerteeinrichtung, welche die Temperaturerfassung durch die Temperaturerfassungseinrichtung 4 auswertet.

Das Bezugszeichen W kennzeichnet die Wärmestrahlung, die von den Kunststoffvorformlingen ausgeht. Diese Wärmestrahlung W wird über eine Strahlungsumlenkeinrichtung 6 wie etwa einen Spiegel auf die Temperaturerfassungseinrichtung 4 umgelenkt.

Dieser Spiegel 6 dreht sich dabei, sodass die Wärmestrahlung unterschiedlicher Bereiche der Kunststoffvorformlinge, wie in Figur 2 gezeigt erfasst werden kann. Umgekehrt kann dahingehend betrachtet werden, dass ein Messfleck der Temperaturerfassungseinrichtung auf den Kunststoffvorformling hier von links nach rechts von oben nach unten wandert. Das Bezugszeichen L kennzeichnet die Längsrichtung des Kunststoffvorformlings. Bevorzugt wird der oder werden die Kunststoffvorformlinge auch bezüglich dieser Längsrichtung gedreht.

So wird zunächst eine Temperatur unterhalb eines Tragrings 10a der Kunststoffvorformlinge ermittelt, in einem weiteren Schritt ein oberer Bereich des Grundkörpers erfasst, anschließend wird ein unterer Bereich des Grundkörpers erfasst.

Das Bezugszeichen 12 bezieht sich auf eine Strahlungsumlenkeinrichtung wie etwa einen Spiegel, welche insbesondere zur Temperaturerfassung eines Kuppenbereiches 10b des Kunststoffvorformlings 10 dient. Dabei ist es auch möglich, dass sich die Kunststoffvorformlinge wie durch die Pfeile P1 angedeutet bezüglich ihrer Längsrichtung L drehen.

Das Bezugszeichen 14 kennzeichnet ein Referenzelement mit definierter Wärmestrahlung. Durch Verwendung des Referenzelements kann beispielsweise überprüft werden, ob die Strahlungsumlenkeinrichtung verschmutzt ist und auf diese Weise kann nachgesteuert werden oder auch referenziert werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung zur Temperaturerfassung von Behältnissen (10) und insbesondere von Kunststoffvorformlingen mit einer Transporteinrichtung (2), welche die Behältnisse (10) entlang eines vorgegebenen Transportpfads (T) transportiert und mit einer Temperaturerfassungseinrichtung (4) zum berührungslosen Erfassen einer Temperatur zumindest eines Bereichs eines von der Transporteinrichtung (2) transportierten Behältnisses (10), wobei die Temperaturerfassungseinrichtung (4) dazu geeignet und bestimmt ist, von dem Behältnis (10) abgegebene Wärmestrahlung (W) zu erfassen, **dadurch gekennzeichnet, dass**
in einem Strahlengang der Wärmestrahlung (W) zwischen dem Behältnis (10) und der Temperaturerfassungseinrichtung (4) eine erste Strahlungsumlenkeinrichtung (6) angeordnet ist, welche von dem Behältnis (10) auf diese Strahlungsumlenkeinrichtung (6) gelangende Wärmestrahlung (W) zu der Temperaturerfassungseinrichtung (4) umlenkt.

2. Vorrichtung (1) nach Anspruch 1,
**dadurch gekennzeichnet, dass**
die Temperaturerfassungseinrichtung (4) derart ausgerichtet ist, dass sie keine unmittelbar von dem Behältnis (10) abgegebene Wärmestrahlung (W) aufnimmt.

3. Vorrichtung (1) nach wenigstens einem der vorangegangenen Ansprüche,
**dadurch gekennzeichnet, dass**
die Temperaturerfassungseinrichtung (4) dazu geeignet und bestimmt ist, eine mittlere Temperatur aus der auf sie auftreffenden Strahlung zu bestimmen.

4. Vorrichtung (1) nach wenigstens einem der vorangegangenen Ansprüche,
**dadurch gekennzeichnet, dass**
die Temperaturerfassungseinrichtung (4) ein Pyrometer ist oder aufweist.

5. Vorrichtung (1) nach wenigstens einem der vorangegangenen Ansprüche,
**dadurch gekennzeichnet, dass**
die erste Strahlungsumlenkeinrichtung (6) aus einer Gruppe von Strahlungsumlenkeinrichtungen ausgewählt ist, welche Spiegel und Prismen enthält.

6. Vorrichtung (1) nach wenigstens einem der vorangegangenen Ansprüche,
**dadurch gekennzeichnet, dass**
die Vorrichtung (1) mindestens eine zweite Strahlungsumlenkeinrichtung (12) aufweist, die ebenfalls in dem Strahlengang der Wärmestrahlung (W) zwischen dem Behältnis (10) und der Temperaturerfassungseinrichtung (4) angeordnet ist.

7. Vorrichtung (1) nach wenigstens einem der vorangegangenen Ansprüche,
**dadurch gekennzeichnet, dass**
die erste Strahlungsumlenkeinrichtung (4) und/oder die zweite Strahlungsumlenkeinrichtung (12) beweglich ist.

8. Vorrichtung (1) nach wenigstens einem der vorangegangenen Ansprüche,
**dadurch gekennzeichnet, dass**
die Bewegung der ersten Strahlungsumlenkeinrichtung (6) eine reziprokierende Bewegung ist.

9. Vorrichtung (1) nach wenigstens einem der vorangegangenen Ansprüche,
**dadurch gekennzeichnet, dass**
die Vorrichtung (1) ein Referenzelement (14) aufweist, welches dazu geeignet ist, Wärmestrahlung (W) an die Temperaturerfassungseinrichtung abzugeben.

10. Anordnung (50) zum Herstellen von Kunststoffbehältnissen mit einer Erwärmungseinrichtung, welche dazu geeignet und bestimmt ist, Kunststoffvorformlinge zu erwärmen und mit einer in einer Transportrichtung der Kunststoffvorformlinge nach der Erwärmungseinrichtung angeordneten Umformungseinrichtung zum Umformen von Kunststoffvorformlingen zu Kunststoffbehältnissen wobei die Vorrichtung eine Vorrichtung zur Temperaturerfassung (1) nach wenigstens einem der vorangegangenen Ansprüche aufweist.

11. Verfahren zur Temperaturerfassung von Behältnissen (10) und insbesondere von Kunststoffvorformlingen wobei eine Transporteinrichtung (2), die Behältnisse (10) entlang eines vorgegebenen Transportpfads (T) transportiert und eine Temperaturerfassungseinrichtung (4) eine Temperatur zumindest eines Bereichs eines von der Transporteinrichtung (2) transportierten Behältnisses (10) berührungslos erfasst, wobei die Temperaturerfassungseinrichtung (4) von dem Behältnis abgegebene Wärmestrahlung (W) erfasst,
**dadurch gekennzeichnet, dass**
in einem Strahlengang der Wärmestrahlung (W) zwischen dem Behältnis (10) und der Temperaturerfassungseinrichtung (4) eine erste Strahlungsumlenkeinrichtung (6) angeordnet ist, welche von dem Behältnis (10) auf diese Strahlungsumlenkeinrichtung (6) gelangende Wärmestrahlung (W) zu der Temperaturerfassungseinrichtung (4) umlenkt.
